# EUROPEAN PATENT APPLICATION

(11) **EP 3 611 650 A1**
(43) Date of publication of application: **19.02.2020**
(21) Application number: 19190442.4
(22) Date of filing: 07.08.2019
(51) Int. Cl.: G06K 7/10

(54) **CODE SYMBOL READING DEVICE AND METHOD THEREFOR**

(30) Priority: 17.08.2018 JP 2018153699
(71) Applicant: Toshiba Tec Kabushiki Kaisha, 141-8562 Tokyo (JP)
(72) Inventor: TAKASU, Takuya, Shinagawa-ku, Tokyo 141-8562 (JP); NAITO, Hidehiro, Shinagawa-ku, Tokyo 141-8562 (JP)
(74) Representative: Bandpay & Greuter

(57) **Abstract**

A code symbol reading device includes an imaging unit and a control unit. The imaging unit is configured to image a code symbol to facilitate capturing image data. The control unit is configured to receive the image data captured by the imaging unit, decode data encoded in the code symbol based on the image data, operate the imaging unit under a first imaging condition for imaging the code symbol, operate the imaging unit under a second imaging condition for imaging the code symbol, and switch between the first imaging condition and the second imaging condition in response to at least one of (i) the control unit failing to decode the data encoded in the code symbol or (ii) receiving a switch command from an operator. The second imaging condition includes switching among a plurality of the mutually different imaging conditions according to a switching procedure.

## Description

### FIELD

Embodiments described herein relate generally to a code symbol reading device and a method therefor.

### BACKGROUND

In the related art, commodity sale data processing devices such as point of sale (POS) terminals are used at retail stores such as supermarkets or convenience stores. Code symbol reading devices for reading code symbols are connected to the commodity sale data processing devices. A code symbol reading device includes an imaging unit and reads data such as a price or identification information for identifying a commodity by imaging a code symbol such as a barcode or a 2-dimensional code attached to the commodity. Then, a commodity sale data processing device performs sale data processing such as a payoff process based on data read by the code symbol reading device.

In recent years, code symbols displayed on display screens of portable terminals or the like are read in some cases. For example, in services in which electronic data including code symbols indicating coupon tickets is delivered to portable terminals carried by customers, code symbols displayed on display screens of the portable terminals are read by code symbol reading devices. In this case, commodity sale data processing devices perform price reduction or discount or the like based on data read by the code symbol reading devices.

Incidentally, brightness (luminance) of display screens of portable terminals can be changed manually or automatically. There are many kinds of display screens and characteristics related to display are different. Therefore, there is a concern that code symbols displayed on the display screens cannot be read in uniform imaging conditions. Accordingly, in the related art, technologies for being able to switch exposure time, gains, or the like of image sensors are proposed as reading devices for reading 2-dimensional codes displayed on liquid crystal panels.

However, since the foregoing technologies of the related art are specialized for reading code symbols displayed on display screens, the versatility is low. Therefore, there is a possibility that gains and the like are switched even when code symbols attached to commodities are read, and thus there is a possibility that the code symbols cannot be efficiently read.

### SUMMARY OF INVENTION

To solve such problem, there is provided a code symbol reading device comprising: an imaging unit for imaging a code symbol to facilitate capturing image data; and a control unit configured to: receive the image data captured by the imaging unit; decode data encoded in the code symbol based on the image data; operate the imaging unit under a first imaging condition for imaging the code symbol; operate the imaging unit under a second imaging condition for imaging the code symbol, wherein the second imaging condition includes switching among a plurality of the mutually different imaging conditions according to a switching procedure; and switch between the first imaging condition and the second imaging condition in response to at least one of (i) the control unit failing to decode the data encoded in the code symbol or (ii) receiving a switch command from an operator.

Preferably, the control unit is configured to: record at least one of a number of times or a success rate of which the decoding is successful as performance information for each of the plurality of mutually different imaging conditions; and determine the switching procedure for the plurality of the mutually different imaging conditions based on the performance information.

Preferably still, the control unit is configured to: maintain the first imaging condition or the second imaging condition in response to the decoding being successful; and start from the maintained imaging condition when the imaging unit subsequently images another code symbol.

Preferably yet, the imaging unit is a first imaging unit, further comprising a second imaging unit.

Suitably, the control unit is configured to default to operating the first imaging unit under the first imaging condition, and wherein the control unit is configured to default to operating the second imaging unit under the second imaging condition.

Suitably still, the control unit is configured to operate the second imaging unit using only the second imaging condition.

Suitably yet, the first imaging condition is configured to facilitate enhanced imaging a first type of code symbol, and wherein the second imaging condition is configured to facilitate enhanced imaging of a second type of code symbol that is different than the first type of code symbol.

Typically, the first type of code symbol is a code symbol disposed on a commodity.

Typically still, the second type of code symbol is a code symbol displayed on a display of an electronic device.

Typically yet, the control unit is configured to switch operation of the imaging unit between the first imaging condition and the second imaging condition in response to the control unit failing to decode the data encoded in the code symbol based on the image data captured by the imaging unit.

Preferably, the control unit is configured to switch operation of the imaging unit between the first imaging condition and the second imaging condition in response to the control unit receiving the switch command from the operator.

The invention also relates to a code symbol reading device comprising: a first imaging unit for imaging code symbols to facilitate capturing image data; a second imaging unit for imaging code symbols to facilitate capturing image data; and a control unit configured to: operate the first imaging unit under a first imaging condition f; operate the second imaging unit under a second imaging condition that is different that the first imaging condition, wherein the second imaging condition includes switching among a plurality of the mutually different imaging conditions according to a switching procedure; receive the image data captured by the first imaging unit and the second imaging unit; and decode data encoded in the code symbols based on the image data.

Preferably, the control unit is configured to: record at least one of a number of times or a success rate of which the decoding is successful as performance information for each of the plurality of mutually different imaging conditions; and determine the switching procedure for the plurality of the mutually different imaging conditions based on the performance information.

Preferably still, the control unit is configured to facilitate switching operation of the first imaging unit from the first imaging condition to the second imaging condition.

Preferably yet, the control unit is configured to switch operation of the first imaging unit from the first imaging condition to the second imaging condition in response to the control unit failing to decode the data encoded in a respective code symbol based on the image data captured by the first imaging unit.

Suitably, the control unit is configured to switch operation of the first imaging unit from the first imaging condition to the second imaging condition in response to the control unit receiving a switch command from an operator.

Suitably still, the control unit is configured to default to operating the first imaging unit under the first imaging condition.

Suitably yet, the control unit is configured to: maintain operating the first imaging unit under the first imaging condition or the second imaging condition in response to the decoding being successful; and start from the maintained imaging condition when the first imaging unit subsequently images another code symbol.

Typically, the first imaging condition is configured to facilitate enhanced imaging a first type of code symbol, wherein the second imaging condition is configured to facilitate enhanced imaging of a second type of code symbol that is different from the first type of code symbol, wherein the first type of code symbol is a code symbol disposed on a commodity, and wherein the second type of code symbol is a code symbol displayed on a display of an electronic device.

The invention further relates to method for controlling a code symbol reading device, the method comprising: operating, by a control unit of the code symbol reading device, an imaging unit of the code symbol reading device under a first imaging condition for imaging code symbols; acquiring, by the control unit, image data regarding the code symbols captured by the imaging unit using the first imaging condition; decoding, by the control unit, data encoded in the code symbols based on the image data; switching, by the control unit, operation of the imaging unit from the first imaging condition to a second imaging condition for imaging the code symbols in response to at least one of (i) failing to decode the data encoded in one of the code symbols or (ii) receiving a switch command from an operator; and operating, by the control unit, the imaging unit under the second imaging condition, wherein the second imaging condition includes switching among a plurality of the mutually different imaging conditions according to a switching procedure.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a perspective view illustrating an overall configuration of a POS system according to a first embodiment;
FIG. 2 is a diagram illustrating an example of a configuration of a reading device according to the first embodiment;
FIG. 3 is a diagram illustrating an example of a hardware configuration of the reading device according to the first embodiment;
FIG. 4 is a diagram illustrating an example of a functional configuration of the reading according to the first embodiment;
FIGS. 5A to 5C are diagrams illustrating examples of data configurations of imaging condition tables according to the first embodiment;
FIG. 6 is a flowchart illustrating an example of a code symbol reading process performed by the reading device according to the first embodiment;
FIG. 7 is a diagram illustrating an example of a configuration of a reading device according to a second embodiment;
FIG. 8 is a diagram illustrating an example of a hardware configuration of the reading device according to the second embodiment; and
FIG. 9 is a diagram illustrating an example of a functional configuration of the reading device according to the second embodiment.

### DETAILED DESCRIPTION

Embodiments provide a code symbol reading device and a method capable of efficiently reading code symbols.

In general, according to one embodiment, a code symbol reading device includes: imaging means for imaging a code symbol; acquisition means for acquiring image data captured by the imaging means; decoding means for decoding data encoded in the code symbol based on the image data; first control means for operating the imaging means under one imaging condition set for imaging a code symbol attached to a commodity; and second control means for operating the imaging means while switching among a plurality of the mutually different imaging conditions. The second control means switches between the imaging conditions under the condition that the decoding in the decoding means fails.

Hereinafter, a code symbol reading device and a method therefor according to embodiments will be described. In the following embodiments, application examples of POS systems installed at a retail store will be described. However, exemplary embodiments are not limited to the embodiments.

### First Embodiment

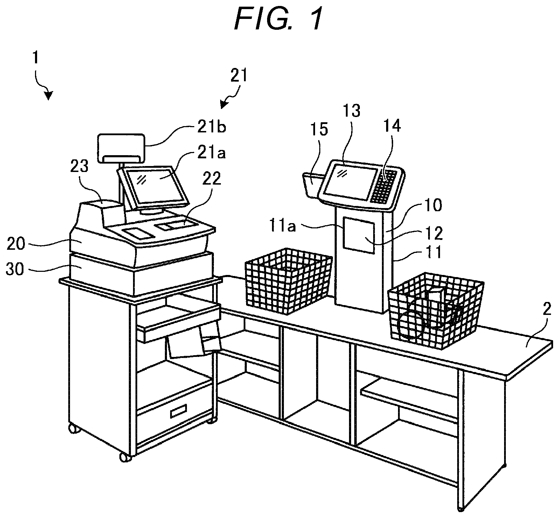

FIG. 1 is a perspective view illustrating an overall configuration of a POS system 1 according to a first embodiment. As illustrated in FIG. 1, the POS system 1 includes a reading device 10 which is an example of a code symbol reading device and a POS terminal 20 that performs data processing based on data read by the reading device 10.

The reading device 10 stands on a sacker table 2 on which a shopping basket or the like is placed, at a location (substantial middle) at which an operator faces a customer. The POS terminal 20 is provided near one end of the sacker table 2. The reading device 10 and the POS terminal 20 are connected to be able to communicate via a transmission path (not illustrated). The reading device 10 and the POS terminal 20 are included in the POS system 1.

The POS terminal 20 performs sale data processing including a registration process and a payoff process for commodities purchased by a customer based on data of the commodities or the like read by the reading device 10. The POS terminal 20 is installed on a drawer 30 that accommodates coins and bills so that the coins and bills can be picked up. The POS terminal 20 includes two displays 21a and 21b for the operator and the customer, an input device 22 including a keyboard or a key, and a receipt printer 23.

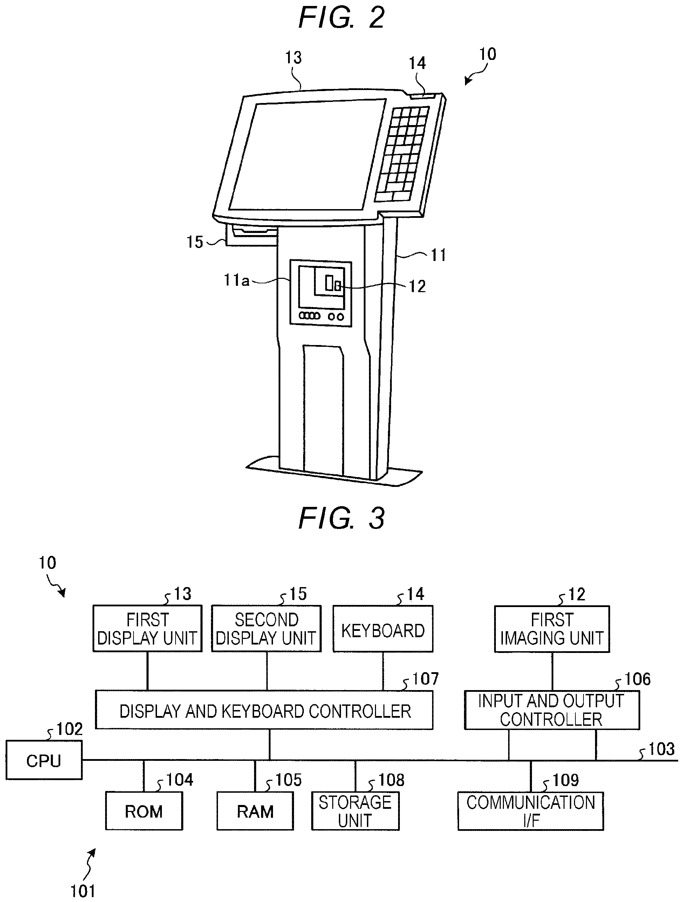

Next, a configuration of the reading device 10 will be described with reference to FIG. 2. FIG. 2 is a diagram illustrating an example of a configuration of the reading device 10. Here, FIG. 2 illustrates a state when the reading device 10 is seen from a side on which an imaging window 11a is provided (a side on which the operator stands).

As illustrated in FIG. 2, the reading device 10 includes a body unit 11, a first imaging unit 12, a first display unit 13, a keyboard 14, and a second display unit 15.

The body unit 11 is formed in a substantially rectangular parallelepiped shape and stands on the sacker table 2. The height of the body unit 11 is preferably, for example, about the height of the eyes of the operator on the stacker table 2.

The imaging window 1 1a is provided on the side of the body unit 11 that the operator stands . The first imaging unit 12 is an example of an imaging unit (first imaging unit) and is installed inside the imaging window 11a. The operator reads (images) a commodity brought by a shopper by holding up the commodity to the imaging window 11a. The first imaging unit 12 is an image sensor that includes an imaging element such as a charge coupled device (CCD) or a complementary metal oxide semiconductor (CMOS) image sensor. The first imaging unit 12 images the outside of the body unit 11 through the imaging window 11a. For example, the first imaging unit 12 optically images a code symbol (a barcode, a 2-dimensionall code, or the like) attached to a commodity. For example, the first imaging unit 12 optically images a code symbol displayed on a display screen of a portable terminal or the like carried by the customer.

Here, in a code symbol attached to a commodity, data such as an identifier (commodity code) or a price of the commodity is assumed to be maintained in a state of being encoded in a barcode or a 2-dimensional code. For example, in a code symbol displayed on a display screen of a portable terminal or the like, data indicating a coupon ticket of a price reduction or discount or the like is assumed to be maintained in a state of being encoded in a barcode or a 2-dimensional code. When the reading device 10 reads data indicating a coupon ticket or the like, the POS terminal 20 performs a process such as a price reduction or discount based on the data.

The first display unit 13 is a display device for an operator and is provided above the imaging window 11a. The first display unit 13 is a display device with a touch panel including a display device such as a liquid crystal display (LCD). The first display unit 13 displays a name, a price, and the like of a commodity registered for the operator in response to a sale registration process by the POS terminal 20.

The keyboard 14 is provided near (on the side) of the first display unit 13. The keyboard 14 includes various keys for registering a commodity which cannot be registered with a code symbol or an object image. FIG. 2 illustrates an example in which the first display unit 13 and the keyboard 14 are integrated, but the first display unit 13 and the keyboard 14 may be separated from each other.

The second display unit 15 is a display device with a touch panel including a display device such as an LCD. The second display unit 15 displays a name, a price, and the like of a commodity registered for the shopper in response to the sale registration process by the POS terminal 20. In the embodiment, a holding member (not illustrated) is configured to hold the second display unit 15 on the side of the body unit 11, but an exemplary embodiment is not limited to this configuration.

Next, a hardware configuration of the reading device 10 will be described with reference to FIG. 3. FIG. 3 is a diagram illustrating an example of a hardware configuration of the reading device 10. As illustrated in Fig. 3, the reading device 10 includes a microcomputer 101 and the microcomputer 101 drives and controls each unit. In the microcomputer 101, a read-only memory (ROM) 104 that stores fixed information such as a control program in advance and a random access memory (RAM) 105 that stores various kinds of data to be rewritable and functions as a work area or the like are connected to a central processing unit (CPU) 102 that controls each unit in a concentrated manner via a bus line 103. Accordingly, the microcomputer 101 is configured as an information processing unit that performs information processing. A part or the entirety of the RAM 105 is a nonvolatile memory.

An input and output controller 106, a display and keyboard controller 107, a storage unit 108, and a communication interface 109 are connected to the microcomputer 101 via the bus line 103.

The input and output controller 106 is connected to the first imaging unit 12. The input and output controller 106 outputs an image (image data) captured by the first imaging unit 12 to the microcomputer 101. The input and output controller 106 outputs a control signal output from the microcomputer 101 to the first imaging unit 12.

The display and keyboard controller 107 drives and controls the first display unit 13 and the second display unit 15 to display various images on the displayer 21. The display and keyboard controller 107 outputs an operation signal accompanied with a touch operation on the first display unit 13 and the second display unit 15 or an operation signal from the keyboard 14 to the microcomputer 101.

The storage unit 108 is a storage device such as a hard disk drive (HDD) or a solid-state drive (SSD). The storage unit 108 stores various programs or various kinds of data related to operations of the reading device 10. The communication interface 109 enables data to communicate with another device (the POS terminal 20) via a connection line such as a local area network (LAN) cable.

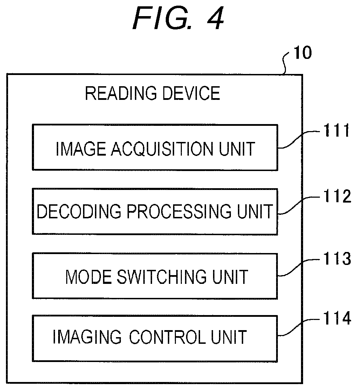

Next, a functional configuration of the reading device 10 will be described with reference to FIG. 4. FIG. 4 is a diagram illustrating an example of a functional configuration of the reading device 10. As illustrated in FIG. 4, the reading device 10 includes an image acquisition unit 111, a decoding processing unit 112, a mode switching unit 113, and an imaging control unit 114 as functional configurations. More specifically, the reading device 10 has the functional configurations as software configurations in cooperation with the CPU 102 and a program stored in the storage unit 108. Some or all of the functional configurations may be realized by hardware configurations such as a dedicated circuit or the CPU 102.

The image acquisition unit 111 is an example of an acquisition unit. The image acquisition unit 111 controls capturing of images by the first imaging unit 12. Specifically, the image acquisition unit 111 starts reading image data captured by the first imaging unit 12 via the input and output controller 106 when an instruction to start transaction is given in accordance with an operation through the keyboard 14 or the first display unit 13 or a signal notified of by the POS terminal 20. The image acquisition unit 111 stops the capturing of the image data when an instruction to end a transaction is given in accordance with an operation through the keyboard 14 or the first display unit 13 or a signal notified of by the POS terminal 20.

The decoding processing unit 112 is an example of a decoding unit. The decoding processing unit 112 reads (captures) data encoded in the code symbol by decoding the code symbol. Specifically, the decoding processing unit 112 detects a region indicating a code symbol from the image data acquired by the image acquisition unit 111 and performs a process of decoding the code symbol.

When the data is read from the code symbol, the decoding processing unit 112 determines that the decoding of the code symbol is successful and outputs the read data to the POS terminal 20 or the like. On the other hand, when the data cannot be read from the code symbol, the decoding processing unit 112 determines that the decoding of the code symbol fails. The definition of the failure of the decoding is not limited to the foregoing example. For example, when the format of the data is different from the regulated format despite the fact that the data can be read from the code symbol, the decoding may be determined to fail.

The mode switching unit 113 is an example of a switching unit. The mode switching unit 113 switches an operation mode of the first imaging unit 12 to a first operation mode or a second operation mode in response to an operation through the keyboard 14 or the first display unit 13. As a default operation mode, the first operation mode may be set in advance to be selected automatically.

The first operation mode is an operation mode for performing imaging under a single imaging condition. The first operation mode functions as an operation mode for imaging a code symbol attached to a commodity. The second operation mode is an operation mode for performing imaging while switching among a plurality of imaging conditions. The second operation mode functions as an operation mode for imaging a code symbol displayed on a display screen such as a liquid crystal display.

For example, the imaging condition is to determine a setting value of each element related to imaging such as a gain or a shutter speed. An imaging condition suitable for imaging a code symbol attached to a commodity is associated with the first operation mode. A plurality of imaging conditions, in which different setting values are set, is associated with the second operation mode. In the plurality of imaging conditions associated with the second operation mode, setting values corresponding to various conditions such as the type of display screen or brightness of the display screen are set in advance. The imaging conditions are stored in the storage unit 108. For example, the storage unit 108 stores and manages the plurality of imaging conditions associated with the second operation mode in an imaging condition table T1.

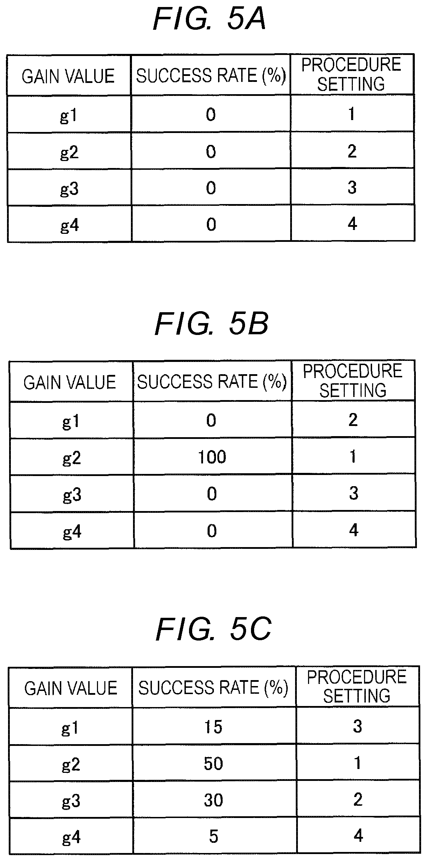

FIGS. 5A to 5C are diagrams illustrating examples of data configurations of the imaging condition table T1. As illustrated in FIGS. 5A to 5C, the imaging condition table T1 stores a plurality of imaging conditions in which different values are set. FIGS. 5A to 5C illustrate examples in which four different gains (g1 to g4) are stored as imaging conditions.

In the imaging condition table T1, a success rate is stored in association with procedure setting for each imaging condition. The success rate indicates the number of decoding successes or a ratio at which the decoding is successful. In the examples of FIGS. 5A to 5C, a success rate of all the imaging conditions registered in the imaging condition table T1 is 100%. Each success rate of decoding when each imaging condition is applied is set. In an initial state, any success rate is also set to 0% (a state of FIG. 5A).

The procedure setting indicates a selection (switching) procedure or priorities of the imaging conditions. The procedure setting is configured to be selected preferentially in the order in which the success rate is higher under the control of the imaging control unit 114 to be described below. In the initial state, for example, the procedure setting is configured in a procedure determined in advance, such as an ascending order or a descending order of setting values of the imaging conditions (the state of FIG. 5A).

Referring back to FIG. 4, the imaging control unit 114 is an example of a first control unit and a second control unit. The imaging control unit 114 controls an operation related to imaging of the first imaging unit 12 in cooperation with the mode switching unit 113. Specifically, the imaging control unit 114 operates the first imaging unit 12 under an imaging condition corresponding to an operation mode in accordance with the operation mode set through switching of the mode switching unit 113.

For example, when an operation mode of the first imaging unit 12 is the first operation mode, the imaging control unit 114 reads an imaging condition associated with the first operation mode and applies (sets) the imaging condition to the first imaging unit 12. Thus, the first imaging unit 12 performs imaging under the imaging condition corresponding to the first operation mode, that is, an imaging condition suitable for reading a code symbol attached to a commodity.

When an operation mode of the first imaging unit 12 is the second operation mode, the imaging control unit 114 applies a plurality of imaging conditions (the imaging condition table T1) associated with the second operation mode to the first imaging unit 12 based on the imaging conditions. Specifically, the imaging control unit 114 selects an imaging condition with the highest-hierarchy in the procedure setting from the imaging condition table T1 and applies the imaging condition to the first imaging unit 12. When the decoding process in the decoding processing unit 112 fails after the application of the imaging condition, the imaging control unit 114 selects an imaging condition with hierarchy lower by one in the procedure setting and applies the imaging condition to the first imaging unit 12. In this way, whenever the decoding fails, the imaging control unit 114 operates the first imaging unit 12 under the imaging condition while switching among the plurality of different imaging conditions.

When the decoding fails after the application of the imaging condition with the lowest hierarchy in the procedure setting, the imaging control unit 114 returns the procedure setting to the imaging condition with the highest-hierarchy in the procedure setting and repeatedly applies imaging conditions registered in the imaging condition table T1. This is a control method based on the fact that a positional relation between the first imaging unit 12 and a display screen (a portable terminal) easily changes, and there is a possibility that the decoding can be successful by a change in the positional relation even when the same imaging condition is applied. The control method is also effective, for example, when brightness of a display screen in a terminal device is set to automatically change.

The imaging control unit 114 increases the success rate in all the imaging conditions stored in the imaging condition table T1 by counting the number of successes in the imaging condition during the application when the decoding of the code symbol is successful under the second operation mode. Then, the imaging control unit 114 performs a process of increasing the success rate of the corresponding imaging condition whenever the decoding is successful. Thus, in each of the imaging conditions stored in the imaging condition table T1, a value indicating a success ratio of the decoding is set as a success rate. Then, the imaging control unit 114 changes the value of the procedure setting so that the imaging condition is selected in the higher order of the success rate.

For example, in the state of the imaging condition table T1 illustrated in FIG. 5A, the imaging control unit 114 first applies a gain value g1 of procedure setting "1". When the decoding fails under the imaging condition of the gain value g1, the imaging control unit 114 applies a gain value g2 of subsequent procedure setting "2". When the decoding succeeds under the imaging condition of the gain value g2, the imaging control unit 114 increases the success rate related to the gain value g2, as illustrated in FIG. 5B.

In FIG. 5B, the success rate of the gain value g2 is 100% since the number of decoding successes is one (first time) in the entire imaging condition table T1. The imaging control unit 114 updates the procedure setting in accordance with the updating of the success rate. FIG. 5B illustrates an example in which the procedure setting of the gain value g2 at which the success rate is the highest is changed to "1" and the procedure setting of the gain value g1 which has been "1" until now is changed to "2".

As described above, the imaging control unit 114 changes the success rate and the procedure setting of each imaging condition in accordance with success or failure of the decoding. The state of the imaging condition table T1 in which the number of decoding successes is n times is assumed to be a state illustrated in FIG. 5C. Even in this case, the imaging control unit 114 sets the procedure setting in the order from the imaging condition in which the success rate is high.

Accordingly, the imaging control unit 114 sequentially selects an imaging condition in which the success rate of the decoding is higher under the second operation mode. Thus, since the imaging condition in which the code symbol displayed on the display screen is read at a higher probability can be applied preferentially, it is possible to shorten a standby time until the decoding is successful.

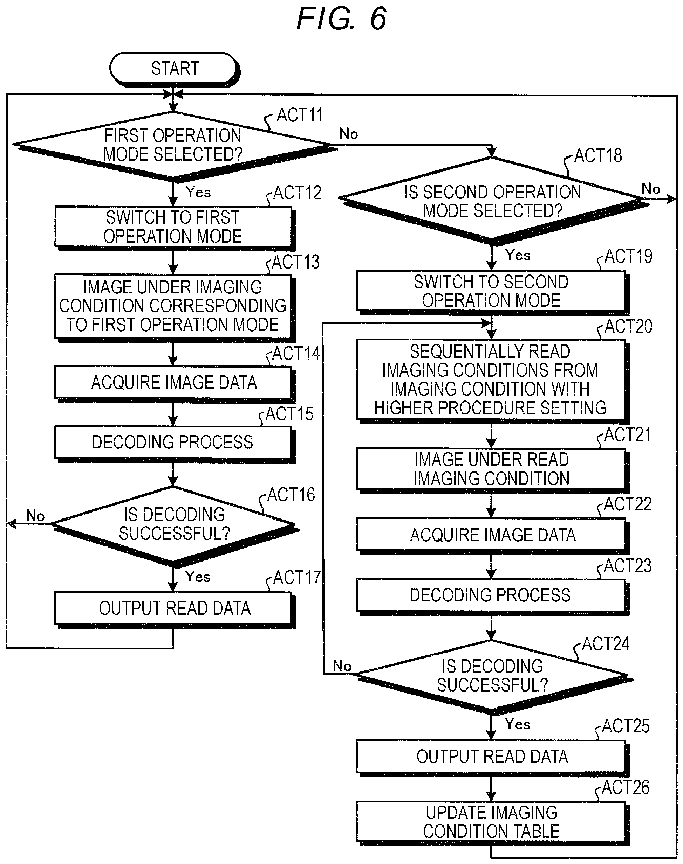

Next, an example of a process performed by the reading device 10 will be described with reference to FIG. 6. FIG. 6 is a flowchart illustrating an example of a code symbol reading process performed by the reading device 10.

First, the mode switching unit 113 waits until one operation mode is selected between two operation modes, first and second operation modes (No in ACT11 → No in ACT18).

Here, the operator of the reading device 10 can select any operation mode through the keyboard 14 or the like. For example, the operator selects the first operation mode when reading a code symbol attached to a commodity. The operator selects the second operation mode when reading a code symbol displayed on a display screen of a portable terminal carried by a customer. When the default operation mode (the first operation mode) is set, the default operation mode is assumed to be automatically selected without depending on an operation by a user.

When the first operation mode is selected (Yes in ACT11), the mode switching unit 113 switches the operation mode of the first imaging unit 12 to the first operation mode (ACT12). Subsequently, the imaging control unit 114 operates the first imaging unit 12 under a single imaging condition associated with the first operation mode by applying this imaging condition (ACT13).

When the first imaging unit 12 performs the imaging under the applied imaging condition, the imaging acquisition unit 111 acquires image data captured by the first imaging unit 12 (ACT14). Subsequently, when the code symbol is detected from the image data acquired in ACT14, the decoding processing unit 112 performs the decoding process (ACT15).

Subsequently, the decoding processing unit 112 determines whether the decoding of the code symbol is successful (ACT16). Here, when the data can be read from the code symbol, the decoding processing unit 112 determines that the decoding is successful (Yes in ACT16). Then, the decoding processing unit 112 outputs the data read from the code symbol to the POS terminal 20 or the like (ACT17) and returns the process to ACT11. Conversely, when data cannot be read from the code symbol, the decoding processing unit 112 determines that the decoding fails (No in ACT16) and returns the process to ACT11.

On the other hand, when the second operation mode is selected (No in ACT11 → Yes in ACT 18), the mode switching unit 113 switches the operation mode of the first imaging unit 12 to the second operation mode (ACT19). Subsequently, the imaging control unit 114 sequentially reads an imaging condition in the order having the higher procedure setting based on the imaging condition table T1 associated with the second operation mode (ACT20) and operates the first imaging unit 12 under the read imaging condition (ACT21).

When the first imaging unit 12 performs the imaging under the applied imaging condition, the image acquisition unit 111 acquires image data captured by the first imaging unit 12 (ACT22). Subsequently, when the code symbol is detected from the image data acquired in ACT22, the decoding processing unit 112 performs the decoding process (ACT23).

Subsequently, the decoding processing unit 112 determines whether the decoding of the code symbol is successful (ACT24). Here, when data cannot be read from the code symbol, the decoding processing unit 112 determines that the decoding fails (No in ACT24). In this case, the imaging control unit 114 returns the process to ACT20 and reads the subsequent imaging condition from the imaging condition table T1.

In addition, when the data can be read from the code symbol, the decoding processing unit 112 determines that the decoding process is successful (Yes in ACT24) and outputs the read data to the POS terminal 20 or the like (ACT25). Then, the imaging control unit 114 updates the success rate and the procedure setting value stored in the imaging condition table T1 under the imaging condition in which the decoding process is successful (ACT26) and returns the process to ACT11. When the decoding is successful in the second operation mode, the default operation mode (the first operation mode) may be automatically selected to be returned to the first operation mode.

Through the foregoing process, the reading device 10 reads the data from the code symbol attached to the commodity or the code symbol displayed on the display screen of the terminal device and outputs the read data to the POS terminal 20. Thus, the POS terminal 20 can performs sale data processing such as a registration, payoff, or price reduction for commodities purchased by a customer based on the data input from the reading device 10.

As described above, the reading device 10 according to the embodiment has the dedicated operation mode for reading a code symbol attached to a commodity and a code symbol displayed on a screen and performs reading while switching among the plurality of imaging conditions when reading the code symbol displayed on the screen. Thus, the reading device 10 can efficiently read the code symbol attached to the commodity since reading device 10 can image the code symbol under the imaging condition suitable for the reading of the code symbol attached to the commodity. The reading device 10 can efficiently read the code symbol displayed on the screen since the reading device 10 can read the code symbol while searching for the imaging condition suitable for brightness (luminance) or characteristics of the display screen with regard to the code symbol displayed on the screen.

The reading device 10 records the success rate of the decoding of the code symbol and sequentially selects an imaging condition in the order having a higher success rate with regard to the reading of the code symbol displayed on the screen. Thus, the reading device 10 can achieve acceleration of the reading since the reading device 10 can preferentially apply the imaging condition capable of reading the code symbol displayed on the screen with a higher probability.

### Second Embodiment

The first embodiment describes the configuration example in which the code symbol attached to the commodity or the code symbol displayed on the screen is read using one imaging device (the first imaging unit 12). In a second embodiment, a configuration example in which two imaging devices are provided will be described. The same reference numerals are given to similar elements to those of the first embodiment, and the description thereof will be omitted.

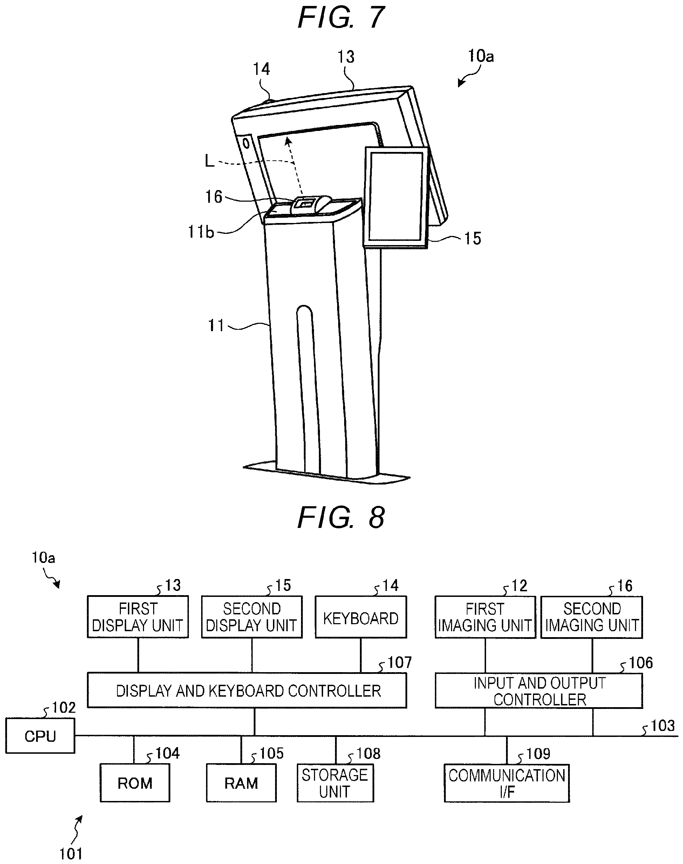

FIG. 7 is a diagram illustrating an example of a configuration of a reading device 10a according to the second embodiment. Here, FIG. 7 illustrates a state in which the imaging device 10a is seen from an opposite side to the side on which the imaging window 11a is provided (the side on which a customer stands). The reading device 10a is an example of a code symbol reading device corresponding to the above-described reading device 10.

As illustrated in FIG. 7, an upper surface 11b of the body unit 11 has an inclined surface descending from the side on which the operator stands to the side on which the customer stands. On the inclined surface, a second imaging unit 16 which is an example of an imaging unit (second imaging unit) is provided. An optical axis direction (imaging direction) L of the second imaging unit 16 is a direction substantially perpendicular to the inclination of the upper surface 1 1b, that is, is oriented upward the side on which the customer stands.

While the above-described first imaging unit 12 is provided for reading (imaging) by the operator, the second imaging unit 16 is provided for reading by the customer. Specifically, the second imaging unit 16 optically images a predetermined commodity carried by the customer. As an imaging target commodity, for example, a display screen of a portable terminal carried by the customer can be exemplified. That is, the second imaging unit 16 is provided for the reading of a code symbol displayed on the screen.

In the embodiment, the second imaging unit 16 is configured to be integrated with the body unit 11, but an exemplary embodiment is not limited thereto. The second imaging unit 16 and the body unit 11 may be separated from each other.

Next, a hardware configuration of the reading device 10a will be described with reference to FIG. 8. FIG. 8 is a diagram illustrating an example of a hardware configuration of the reading device 10a. As illustrated in FIG. 8, the reading device 10a includes the microcomputer 101 (the CPU 102, the bus line 103, the ROM 104, and the RAM 105) as in the reading device 10. The input and output controller 106, the display and keyboard controller 107, the storage unit 108, and the communication interface 109 are connected to the microcomputer 101 via the bus line 103. The input and output controller 106 is connected to the first imaging unit 12 and the second imaging unit 16. The input and output controller 106 outputs images (image data) captured by the first imaging unit 12 and the second imaging unit 16 to the microcomputer 101. The input and output controller 106 outputs control signals output from the microcomputer 101 to the first imaging unit 12 and the second imaging unit 16.

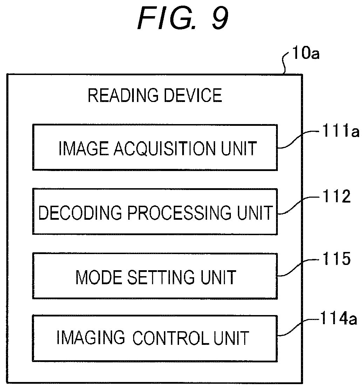

Next, a functional configuration of the reading device 10a will be described with reference to FIG. 9. FIG. 9 is a diagram illustrating an example of a functional configuration of the reading device 10a. As illustrated in FIG. 9, the reading device 10a includes an image acquisition unit 111a, the decoding processing unit 112, a mode setting unit 115, and an imaging control unit 114a as functional configurations. More specifically, the reading device 10a has the functional configurations as software configurations in cooperation with the CPU 102 and a program stored in the storage unit 108. Some or all of the functional configurations may be realized by hardware configurations such as a dedicated circuit or the CPU 102.

The image acquisition unit 11 1a is an example of an acquisition unit. The image acquisition unit 111a controls the capturing of images by the first imaging unit 12 and the second imaging unit 16. Specifically, the image acquisition unit 111a starts reading image data captured by the first imaging unit 12 and the second imaging unit 16 via the input and output controller 106 when an instruction to start transaction is given in accordance with an operation through the keyboard 14 or the first display unit 13 or a signal notified of by the POS terminal 20. The image acquisition unit 111a stops the capturing of the image data when an instruction to end transaction is given in accordance with an operation through the keyboard 14 or the first display unit 13 or a signal notified of by the POS terminal 20.

The mode setting unit 115 is a functional unit that sets operation modes of the first imaging unit 12 and the second imaging unit 16. In the embodiment, the mode setting unit 115 sets the first operation mode in the first imaging unit 12 and sets the second operation mode in the second imaging unit 16.

The mode setting unit 115 may be configured to switch between the first operation mode and the second operation mode in each of the first imaging unit 12 and the second imaging unit 16 as in the first embodiment. In this case, the first operation mode is preferably set as a default operation mode in the first imaging unit 12. The second operation mode is preferably set as a default operation mode in the second imaging unit 16.

The imaging control unit 114a is an example of a first control unit and a second control unit. The imaging control unit 114a controls an operation related to the imaging of the first imaging unit 12 and the second imaging unit 16 in cooperation with the mode setting unit 115. Specifically, the imaging control unit 114a operates the first imaging unit 12 and the second imaging unit 16 under an imaging condition corresponding to an operation mode in accordance with the operation mode set through the mode setting unit 115.

For example, the imaging control unit 114a applies an imaging condition corresponding to the first operation mode to the first imaging unit 12 in which the first operation mode is set. Thus, the first imaging unit 12 performs imaging under the imaging condition corresponding to the first operation mode, that is, an imaging condition suitable for the reading of a code symbol attached to a commodity. The imaging control unit 114a sequentially applies the imaging conditions registered in the imaging condition table T1 to the second imaging unit 16 in which the second operation mode is set. An operation of the imaging control unit 114a related to the switching of the imaging condition in the second operation mode and the update of the procedure setting and the success rate is similar to that of the above-described imaging control unit 114.

Next, an operation of the reading device 10a will be described. The first imaging unit 12 of the two imaging devices in the reading device 10a is an imaging device for the operator and is used only for reading a code symbol attached to a commodity. Therefore, the mode setting unit 115 sets the first operation mode in the first imaging unit 12. Thus, the imaging control unit 114a operates the first imaging unit 12 under an imaging condition suitable for reading the code symbol attached to the commodity by applying a single imaging condition corresponding to the first operation mode to the first imaging unit 12.

On the other hand, the second imaging unit 16 is an imaging device for the customer and is assumed to set a display screen of a portable terminal carried by the customer as an imaging target. Therefore, the mode setting unit 115 sets the second operation mode in the second imaging unit 16. Thus, the imaging control unit 114a operates the second imaging unit 16 under various imaging conditions by sequentially applying the imaging conditions to the second imaging unit 16 based on a plurality of imaging conditions (the imaging condition table T 1) corresponding to the second operation mode.

As described above, the reading device 10a according to the embodiment has the dedicated operation mode for reading a code symbol attached to a commodity and a code symbol displayed on a screen and performs reading while switching among the plurality of imaging conditions when reading the code symbol displayed on the screen. Accordingly, the reading device 10a can obtain similar advantages to those of the reading device 10 of the first embodiment. The reading device 10a can efficiently read code symbols since the reading device 10a causes the first imaging unit 12 for the operator and the second imaging unit 16 for the customer to read the code symbols in the operation modes suitable for the purposes.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

For example, in the foregoing first embodiment, the first operation mode and the second operation mode are switched in response to a manual operation by the operator, but may be switched automatically. For example, when the first operation mode is initially operated and decoding fails in a decoding process of the first operation mode, the mode may be switched to the second operation mode automatically.

In the foregoing embodiments, the procedure setting is updated according to the success or failure of the decoding, but an exemplary embodiment is not limited thereto. The procedure setting may be fixed. For a code symbol displayed on a screen, an imaging condition in which the decoding is successful in the previous reading may be stored in the RAM 105, the storage unit 108, or the like and the imaging condition may be used preferentially (initially) in the subsequent reading.

A program executed in the reading device 10 according to the embodiment is embedded in advance in a storage medium (the ROM 104 or the storage unit 108) of the reading device 10, but an exemplary embodiment is not limited thereto. The program may be supplied in a state of being recorded on a computer-readable recording medium such as a CD-ROM, a flexible disc (FD), a CD-R, or a digital versatile disk (DVD) in a file with an installable format or an executable format. Further, the storage medium is not limited to a medium independent from a computer or an embedded system but also includes a storage medium that downloads a program delivered via a LAN, the Internet, or the like and stores the program or temporarily stores the program.

The program executed in the reading device 10 according to the foregoing embodiments may be stored on a computer connected to a network such as the Internet and may be downloaded via the network to be supplied. The program executed in the reading device 10 according to the foregoing embodiments may be supplied or distributed via a network such as the Internet.

## Claims

1. A code symbol reading device comprising:
an imaging unit for imaging a code symbol to facilitate capturing image data; and
a control unit configured to:
receive the image data captured by the imaging unit;
decode data encoded in the code symbol based on the image data;
operate the imaging unit under a first imaging condition for imaging the code symbol;
operate the imaging unit under a second imaging condition for imaging the code symbol, wherein the second imaging condition includes switching among a plurality of the mutually different imaging conditions according to a switching procedure; and
switch between the first imaging condition and the second imaging condition in response to at least one of (i) the control unit failing to decode the data encoded in the code symbol or (ii) receiving a switch command from an operator.

2. The code symbol reading device of claim 1, wherein the control unit is configured to:
record at least one of a number of times or a success rate of which the decoding is successful as performance information for each of the plurality of mutually different imaging conditions; and
determine the switching procedure for the plurality of the mutually different imaging conditions based on the performance information.

3. The code symbol reading device of claim 1, wherein the control unit is configured to:
maintain the first imaging condition or the second imaging condition in response to the decoding being successful; and
start from the maintained imaging condition when the imaging unit subsequently images another code symbol.

4. The code symbol reading device of claim 1, wherein the imaging unit is a first imaging unit, further comprising a second imaging unit.

5. The code symbol reading device of claim 4, wherein the control unit is configured to default to operating the first imaging unit under the first imaging condition, and wherein the control unit is configured to default to operating the second imaging unit under the second imaging condition.

6. The code symbol reading device of claim 4, wherein the control unit is configured to operate the second imaging unit using only the second imaging condition.

7. The code symbol reading device of claim 1, wherein the first imaging condition is configured to facilitate enhanced imaging a first type of code symbol, and wherein the second imaging condition is configured to facilitate enhanced imaging of a second type of code symbol that is different than the first type of code symbol.

8. The code symbol reading device of claim 7, wherein the first type of code symbol is a code symbol disposed on a commodity.

9. The code symbol reading device of claim 7, wherein the second type of code symbol is a code symbol displayed on a display of an electronic device.

10. The code symbol reading device of claim 1, wherein the control unit is configured to switch operation of the imaging unit between the first imaging condition and the second imaging condition in response to the control unit failing to decode the data encoded in the code symbol based on the image data captured by the imaging unit.

11. The code symbol reading device of claim 1, wherein the control unit is configured to switch operation of the imaging unit between the first imaging condition and the second imaging condition in response to the control unit receiving the switch command from the operator.

12. A code symbol reading device comprising:
a first imaging unit for imaging code symbols to facilitate capturing image data;
a second imaging unit for imaging code symbols to facilitate capturing image data; and
a control unit configured to:
operate the first imaging unit under a first imaging condition f;
operate the second imaging unit under a second imaging condition that is different that the first imaging condition, wherein the second imaging condition includes switching among a plurality of the mutually different imaging conditions according to a switching procedure;
receive the image data captured by the first imaging unit and the second imaging unit; and
decode data encoded in the code symbols based on the image data.

13. The code symbol reading device of claim 12, wherein the control unit is configured to facilitate switching operation of the first imaging unit from the first imaging condition to the second imaging condition.

14. The code symbol reading device of claim 13, wherein the control unit is configured to switch operation of the first imaging unit from the first imaging condition to the second imaging condition in response to the control unit failing to decode the data encoded in a respective code symbol based on the image data captured by the first imaging unit.

15. A method for controlling a code symbol reading device, the method comprising:
operating, by a control unit of the code symbol reading device, an imaging unit of the code symbol reading device under a first imaging condition for imaging code symbols;
acquiring, by the control unit, image data regarding the code symbols captured by the imaging unit using the first imaging condition;
decoding, by the control unit, data encoded in the code symbols based on the image data;
switching, by the control unit, operation of the imaging unit from the first imaging condition to a second imaging condition for imaging the code symbols in response to at least one of (i) failing to decode the data encoded in one of the code symbols or (ii) receiving a switch command from an operator; and
operating, by the control unit, the imaging unit under the second imaging condition, wherein the second imaging condition includes switching among a plurality of the mutually different imaging conditions according to a switching procedure.
